# EUROPÄISCHE PATENTSCHRIFT

(11) **EP 0 863 034 B1**
(45) Veröffentlichungstag und Bekanntmachung des Hinweises auf die Patenterteilung: **22.10.2003**
(21) Anmeldenummer: 98103239.4
(22) Anmeldetag: 25.02.1998
(51) Int. Cl.: B60J 7/20, B60R 21/00

(54) **Cabriolet-Fahrzeug**
Convertible vehicle
Voiture cabriolet

(30) Priorität: 03.03.1997 DE 29703828 U
(43) Veröffentlichungstag der Anmeldung: 09.09.1998
(73) Patentinhaber: Wilhelm Karmann GmbH, D-49084 Osnabrück (DE)
(72) Erfinder: Hesker, Norbert, D-48231 Warendorf (DE)
(74) Vertreter: Busse & Busse Patentanwälte

(56) Entgegenhaltungen:
- EP-A- 0 510 345
- DE-A- 3 923 690
- DE-A- 19 522 353
- US-A- 5 197 560

## Beschreibung

Die Erfindung bezieht sich auf ein Cabiolet-Fahrzeug mit einem faltbaren in einem im rückwärtigen Bereich der Karosserie befindlichen Verdeckkasten absenkbaren Verdeck mit einem den Verdeckkasten oberseitig abdeckenden Verdeckkastendeckel, wobei der Verdeckkastendeckel an seinem in Fahrtrichtung vorderen Bereich mit Sicherungsmitteln versehen ist und das Fahrzeug karosserieseitig angeordnete, den Sicherungsmitteln zugeordnete Gegenlager für eine heckseitige Krafteinwirkung auf den Verdeckkastendeckel umfaßt.

Bei Cabriolet-Fahrzeugen, die mit einem von einem Verdeckkastendeckel oberseitig abgeschlossenen Verdeckkasten versehen sind, stellt sich das Problem, daß bei einem Heckaufprall auf das Fahrzeug sich der Verdeckkastendeckel nach vorne in den Insassenbereich verschieben kann und damit zumindest hinten sitzende Insasssen einer erhöhten Verletzungsgefahr bei einem solchen Heckaufprall ausgesetzt sind.

Aus der dem Oberbegriff des Anspruchs 1 entsprechenden DE 195 22 353 A1 ist ein Fahrzeug der eingangs genannten Art bekannt, bei dem an dem Verdeckkastendeckel im vorderen Bereich Sicherungsmittel und fahrzeugkarosserieseitig Gegenlager vorgesehen sind, die bei heckseitiger Krafteinwirkung auf den Verdeckkastendeckel in Eingriff miteinander stehen. Dabei sind an dem Verdeckkastendeckel Teile als Sicherungsmittel vorgesehen, die mit dem von einem elektrischen Schloß betätigbaren Gegenlager zusammenwirken, wobei die Sicherungmittel und das Schloß permanent miteinander verbunden sind. Zum Öffnen des Deckelteils ist das Schloß elektrisch auszulösen, so daß das Deckelteil in eine Freigabestellung zwecks Freigabe des darunter befindlichen Verdeckkastens gelangen kann. Das Deckelteil ist mit Scharnierteilen an der Fahrzeugkarosserie befestigt, die deckelseitige Scharnierarme aufweisen. Untereinander sind diese über eine Traverse miteinander verbunden, an der Fangseile angreifen, die wiederum mit dem Verdeckkastendeckel verbunden sind. Diese Fangseile dienen dazu, das Deckelteil bei einem heckseitigen Aufprall zu halten, wenn die Scharnierverbindung an dem Verdeckkastendeckel bricht bzw. der entsprechende Scharnierarm zerstört wird. Über das Fangseil, die Traverse und die nicht zerstörten Scharnierteile soll der Verdeckkastendeckel bei einem solchen heckseitigen Aufprall demnach an der Karosserie gesichert sein, um Insassen nicht zu gefährden. Wenn das Scharnier insgesamt bricht, also auch an seinem der Karosserie zugeordneten Scharnierbereich oder aber auch die Traverse zu Bruch geht, kann der Verdeckkastendeckel unkontrolliert auch in Richtung der Fahrzeuginsassen mit dem damit einhergehenden Verletzungsrisiko gelangen.

Aus der US 5,197,560 ist eine Fahrzeugkarosserie mit einer Frontmotorhaube bekannt, bei der eine Sollbruchlinie vorgesehen ist, die dazu dient, daß bei einem Frontaufprall des Fahrzeuges sich die Motorhaube vertormen kann. Die hier anstehende Problematik, die auf einen schwenkbaren Verdeckkastendekkel im Heckbereich eines Cabriolet-Fahrzeuges ausgerichtet ist, ist hier jedoch nicht angesprochen.

Der Erfindung liegt das Problem zugrunde, ein Cabriolet-Fahrzeug der gattungsgemäßen Art dahingehend zu verbessern, daß eine Vorwärtsverlagerung des Verdeckkastendeckels bei einem Heckaufprall sicher vermieden wird, ohne daß hierbei durch den Klappmechanismus des Verdeckkastendeckels belastet wird, und bei der der bauliche Zusatzaufwand gering zu halten ist.

Die Lösung dieses Problems wird mit den Merkmalen des Anspruches 1 erreicht. Hinsichtlich weiterer vorteilhafter Ausgestaltungen wird auf die Ansprüche 2 bis 10 verwiesen.

Durch die Ausbildung zumindest einer Sollbruchlinie im Verdeckkastendeckel wird erreicht, daß dieser nicht als ganzes von den Scharnieren abreißen muß, um eine Vorwärtsverlagerung zu vermeiden, sondern vielmehr dessen Verbindung zu den Scharnieren in gewohnter Weise stabil und daher mechanisch zuverlässig ausgeführt werden kann. Trotzdem ist die Verletzungsgefahr für die Fondpassagiere dadurch gemindert, daß der Verdeckkastendeckel sich nicht als starres Bauteil verschiebt, sondern entlang der Sollbruchlinie einknickt.

Die Verletzungsgefahr für die Fondpassagiere wird auch dadurch verringert, daß im vorderen Bereich des Verdeckkastendeckels Sicherungsmittel an diesem angeordnet sind, die im Falle heckseitiger Krafteinwirkung auf den Verdeckkastendeckel in Eingriff mit karosserieseitig angeordneten Gegenlagern gelangen. Dadurch ist gewährleistet, daß die vordere Kante des Verdeckkastens sich nicht in Fahrzeuglängsrichtung in den Insassenbereich verlagern kann, sondern durch den Eingriff der Sicherungsmittel des Verdeckkastendeckels mit den karosserieseitigen Gegenlagern in im wesentlichen unveränderter Längsposition festgehalten wird. Ferner ist durch diese Sicherungsmittel und Gegenlager erreicht, daß die Schließmechanismen, die den Verdeckkasten in seiner geschlossenen Position halten, nicht verstärkt ausgebildet zu sein brauchen, insbesondere auch nicht an beiden Fahrzeugseiten angeordnet sein müssen. Hier reicht ein in der Ebene der Längsmittelachse des Fahrzeugs angeordnetes Schloß, das allein die geschlossene Klapposition des Verdeckkastendeckels sichert. Dieses Schloß muß keine Sicherungsfunktion bezüglich einer Längsverschiebung des Verdeckkastendeckels im Falle eines Heckaufpralls ausüben. Dadurch ist das Gewicht der Schließkonstruktion insgesamt vermindert.

Vorzugsweise gelangen die Sicherungsmittel mit den Gegenlagern in einen formschlüssigen Eingriff, wodurch die Sicherungsfunktion bei verschiedenen Richtungen der Krafteinleitung zuverlässig gewährleistet ist.

Besonders einfach sind die Gegenlager der Karosserie als in Richtung des Fahrzeughecks vorstehende Winkel ausgebildet, die in Eingriff mit einer Formausnehmung eines vertikal abwärtsverlaufenden Steges des Verdeckkastendeckels gelangen können. Diese Stege weisen vorteilhaft Versteifungsrippen auf, um Biegemomenten um die vertikale Achse entgegenwirken zu können.

Es dürfte einleuchten, daß die zuvor aufgezeigte Lösung sich in besonders vorteilhafter Weise in Verbindung mit der oben beschriebenen Sollbruchlinie im Verdeckkastendeckel verwirklichen läßt, weil sich auf diese Weise ein Höchstmaß an Sicherheit für Fondpassagiere ergibt.

Weitere Vorteile und Einzelheiten der Erfindung ergeben sich aus der Zeichnung sowie der nachfolgenden Beschreibung eines Ausführungsbeispiels. In der Zeichnung zeigen:
- Fig. 1: eine schematische Darstellung des Heckbereiches eines erfindungsgemäßen Cabriolet-Fahrzeugs,

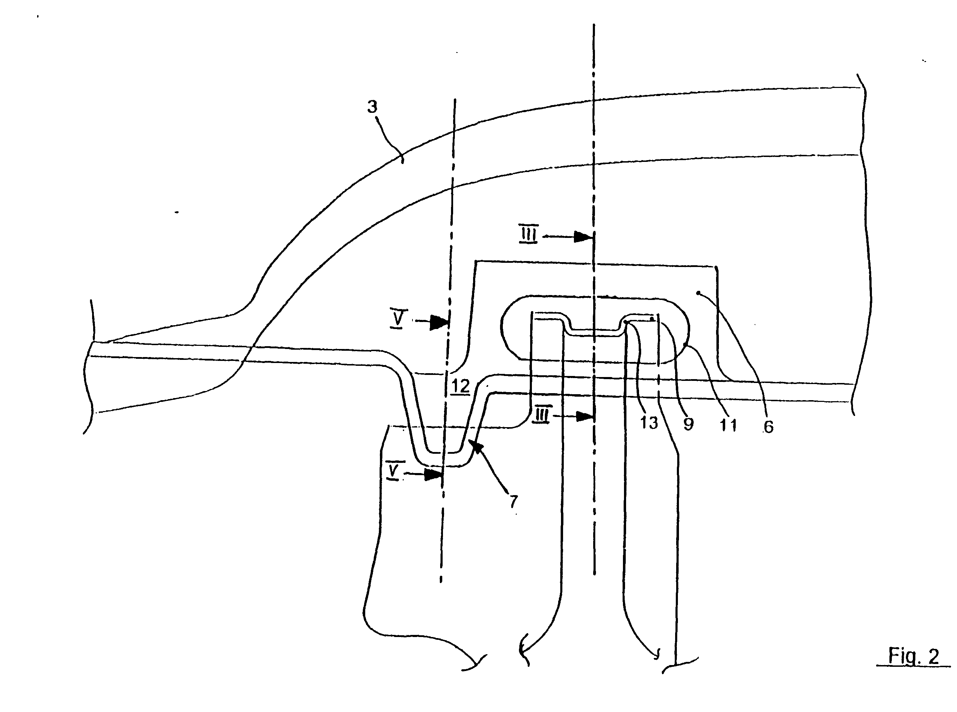

- Fig. 2: einen Schnitt entlang der Linie II-II in Fig. 1,
- Fig. 3: einen Schnitt entlang der Linie III-III in Fig. 2,
- Fig. 4: einen Schnitt der Begrenzungswand und des vorderen Teils des Verdeckkastendeckels aus Fig. 3 in vergrößerter Darstellung,
- Fig. 5: einen Schnitt entlang der Linie V-V in Fig. 2,
- Fig. 6: einen Schnitt der Begrenzungswand und des vorderen Teils des Verdeckkastendeckels aus Fig. 5 in vergrößerter Darstellung,

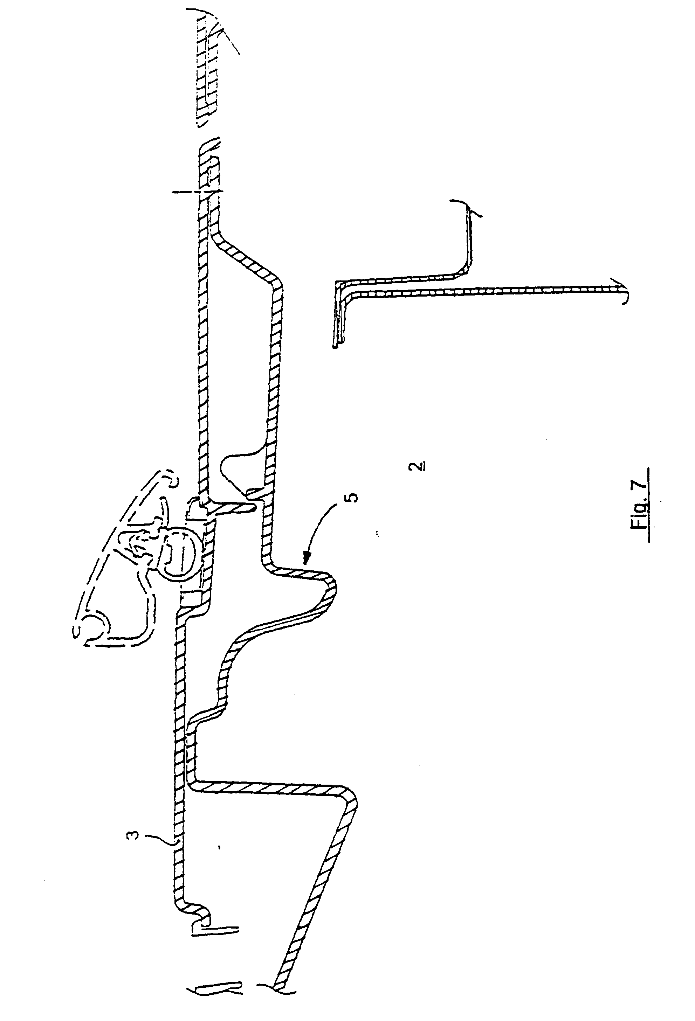

- Fig. 7: einen Schnitt entlang der Linie VII-VII in Fig. 1.

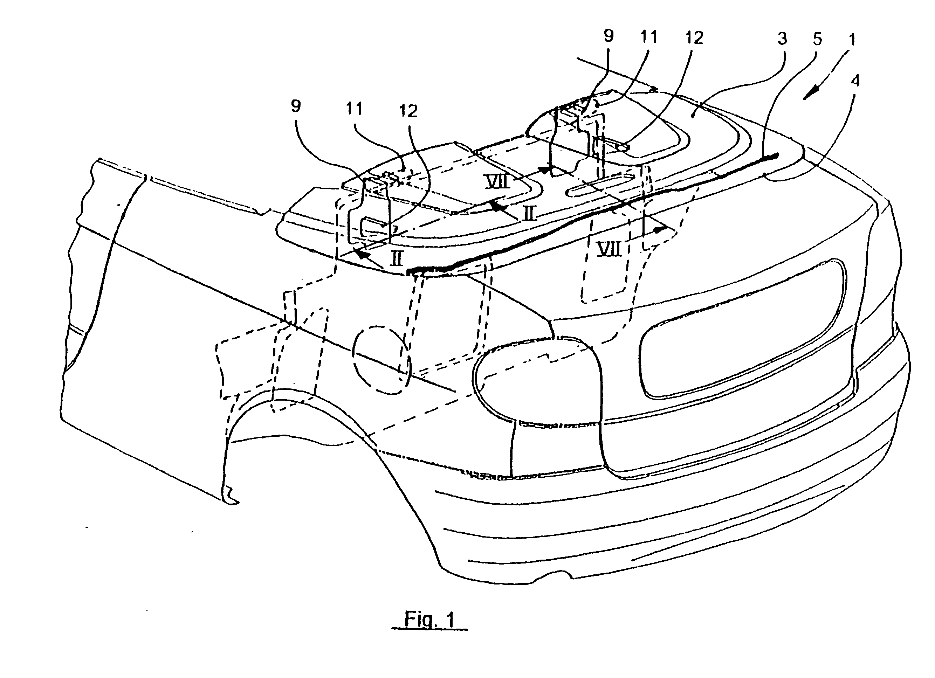

Wie zunächst aus Fig. 1 ersichtlich, weist ein Cabriolet-Fahrzeug 1 in seinem Heckbereich einen Verdeckkasten 2 auf, der oberseitig von einem Verdeckkastendeckel 3 abgedeckt ist.

Ein solcher Verdeckkastendeckel besteht üblicherweise, um möglichst leicht zu sein, aus Kunststoff. Es kommen jedoch auch andere Materialien, wie etwa Aluminiumblech, in Frage. Der Verdeckkastendeckel 3 ist an seinem dem Fahrzeugheck zugewandten Querrand 4 an einer den Verdeckkasten 2 zum Fahrzeugheck hin abschließenden Querwandung über Scharniere 14 angelenkt. Um diese Anlenkung 14 herum ist der Verdeckkastendeckel 3 nach hinten zum Fahrzeugheck hin aufschwenkbar, wodurch der darunterliegende Verdeckkasten 2 für die Aufnahme bzw. Freigabe des Verdecks geöffnet wird.

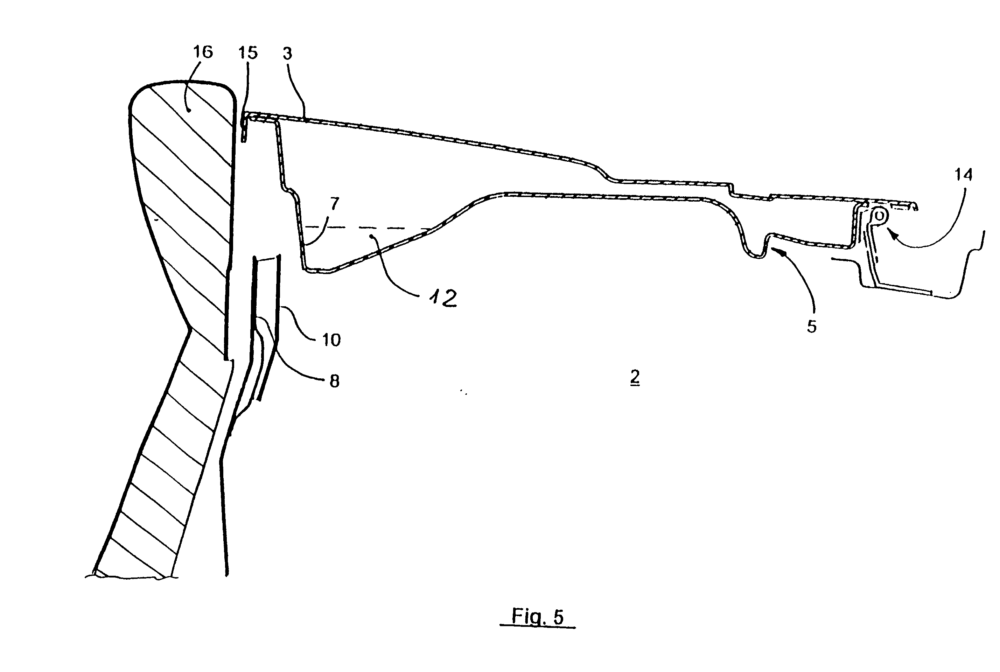

Gemäß einer ersten, in Fig. 1 und 5 veranschaulichten Ausführungsform weist der Verdeckkastendeckel 3 eine im wesentlichen parallel zur Querachse des Fahrzeugs 1 verlaufende Sollbruchlinie 5 auf, die als Schwächungsbereich mit verringerter Materialstärke des Verdeckkastendeckels 3 ausgebildet ist und um die ein Einknicken des geschlossenen Verdeckkastendeckels 3 bei heckseitiger Krafteinwirkung erfolgen kann. Je nach Ausbildung der Verdeckkastenklappe 3 können auch mehrere Sollbruchlinien 5 parallel zueinander angeordnet sein, solange die Verdeckkastenklappe 3 insgesamt nicht instabil wird.

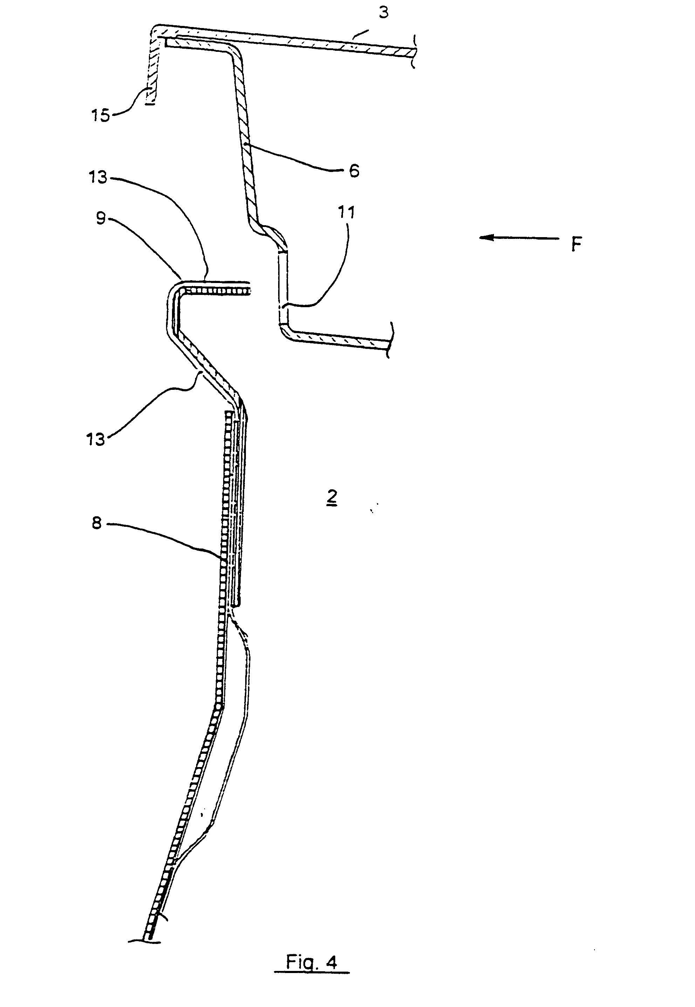

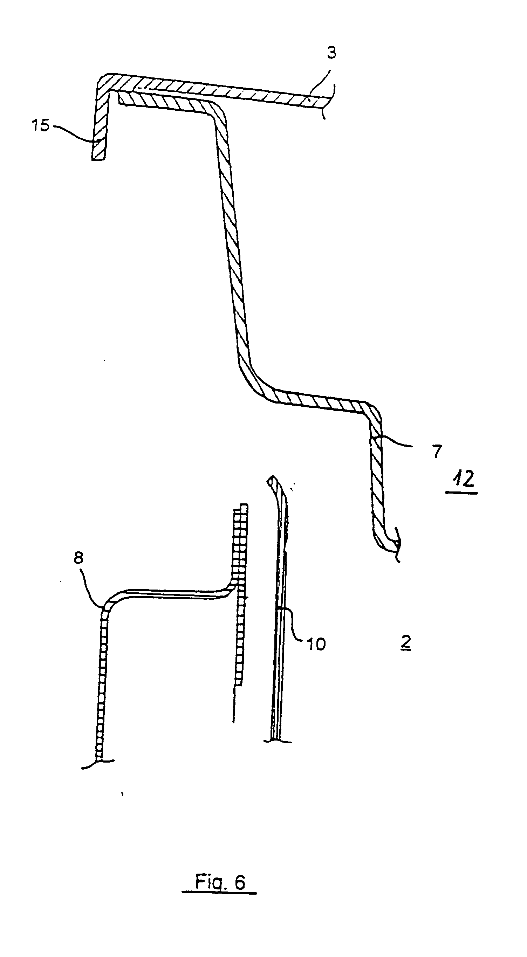

Zusätzlich hierzu sind erfindungsgemäß im vorderen Bereich des Verdeckkastendeckels 3 Mittel vorgesehen, die dafür sorgen, daß der Deckel auch bei einem Unfall fest mit der Karosserie verbunden bleibt und sein Ausreißen verhindert wird. Hierzu sind gemäß der Erfindung an dem Verdeckkastendeckel 3 in dem in Fahrtrichtung vorderen Bereich Sicherungsmittel 6,7 angeordnet, die karosserieseitigen, der vorderen Abgrenzungswand 8 des Verdeckkastens 2 zugeordneten, als Gegenstücke ausgebildeten Sicherungsmitteln 9,10 gegenüber gelegen sind (vgl. insbes. Fig. 4 und 6).

Bei einer heckseitigen Krafteinwirkung auf das Cabriolet-Fahrzeug 1 können sich die Sicherungsmittel 6,7 des Verdeckkastendeckels 3 so weit nach vorne verschieben, daß sie in Eingriff mit den Gegenstücken bzw. -lagern 9,10 der Begrenzungswand 8 gelangen und eine weitere Vorwärtsverlagerung des Verdeckkastendeckels 3 durch diesen Eingriff verhindert wird. Die Begrenzungswand 8 schließt den Insassenraum rückseitig ab und befindet sich unmittelbar hinter den Rücksitzlehnen 16.

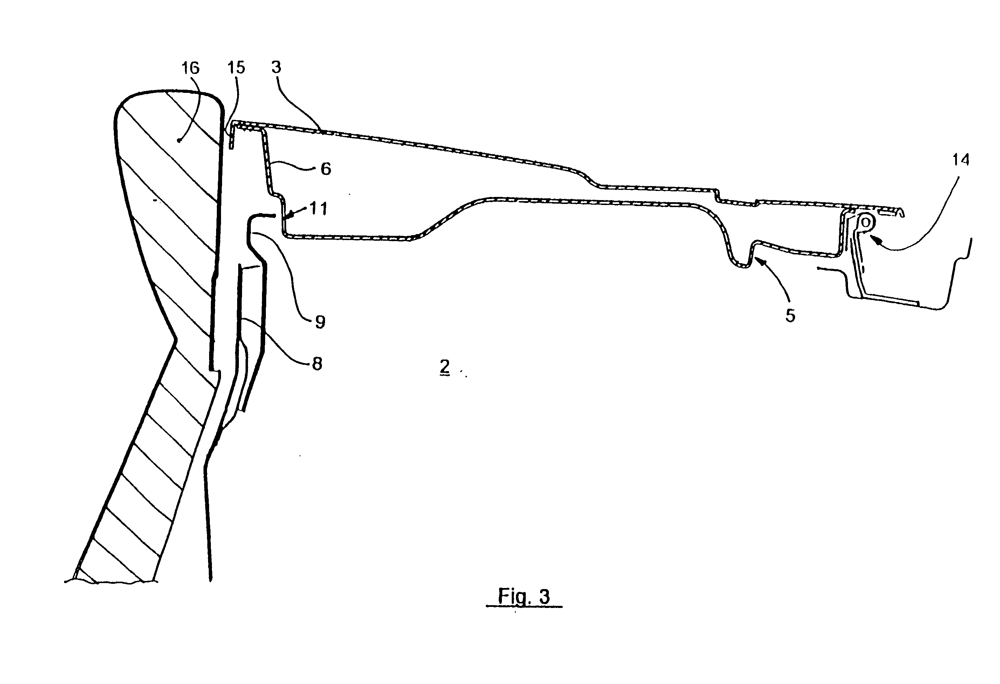

Der Begrenzungswand 8 sind dabei Gegenlager 9 zugeordnet, die im wesentlichen als in Richtung des Fahrzeughecks vorstehende Winkel ausgebildet sind (Fig. 3,4). Der obere Bereich dieser Winkel 9 ist dabei entgegen der Fahrtrichtung abgekröpft; dabei kann die Gestaltung der Winkel so ausgeführt sein (sh. Fig. 4), daß eine Beeinträchtigung des Innenraums des Verdeckkastens 2 durch die Winkel 9 vermieden ist. Als Sicherungsmittel 6 des Verdeckkastendeckels 3 ist jeweils ein im wesentlichen vertikal abwärts verlaufendes Kantenteil ausgebildet, das eine Formausnehmung 11 aufweist, die bei Krafteinwirkung von der Heckseite her in Richtung des Pfeils F nach vorne verlagert wird, wodurch der Winkel 9 der Begrenzungswand 8 in formschlüssigen Eingriff mit der Formausnehmung 11 des Kantenteils 6 des Verdeckkastendeckels 3 gelangt und dadurch den Verdeckkastendeckel 3 sowohl gegen eine weitere Vorwärtsverlagerung als auch gegen ein aufwärtsgerichtetes Ausreißen sichert.

Auch wenn der Verdeckkastendeckel bei Abknicken entlang der Sollbruchlinie 5 mit seiner vorderen Kante in eine verkippte Position gerät, so bleiben die Sicherungsmittel 6,9 in Eingriff miteinander, so daß ein Ausreißen bzw. Wegfliegen des Verdeckkastendeckels 3 verhindert ist.

Zusätzlich zu den in formschlüssigen Eingriff gelangenden Sicherungsmitteln 6,9 können kraftschlüssige Sicherungsmittel 7,10 an dem Verdeckkastendeckel 3 bzw. der Begrenzungswand 8 der Karosserie angeordnet sein (Fig. 5,6), wobei das kraftschlüssige Sicherungsmittel 7 des Verdeckkastendeckels 3 als Stoßkante vorgesehen ist, die das vordere Ende eines an der Innenseite des Verdeckkastendeckels 3 abgestützten Keils 12 ausbildet. Bei heckseitiger Krafteinwirkung gelangt die Stoßkante 7 des Keils 12 in kraftschlüssigen Eingriff mit der der Begrenzungswand 8 zugeordneten Abstützung 10, wodurch einer Vorwärtsverlagerung des Verdeckkastendeckels 3 entgegengewirkt wird. Die kraftschlüssigen Sicherungsmittel 7,10 sind zweckmäßig den formschlüssigen 6,9 unmittelbar benachbart, so daß auch bei schweren Unfällen ein Ausreißen des Verdeckkastendeckels 3 durch die doppelte Abstützung verhindert ist.

Im dargestellten Ausführungsbeispiel sind dem Verdeckkastendeckel 3 zwei solcher doppelten Abstützungen zugeordnet, die sich jeweils in den Seitenbereichen des Fahrzeugs befinden. Auch eine andere Anzahl von Abstützungen, beispielsweise auch eine mittige, ist möglich.

Sowohl die Sicherungsmittel 6 als auch 7 gelangen erst bei entsprechender heckseitiger Krafteinwirkung in Eingriff mit den jeweiligen Gegenstücken 9 bzw. 10. Ohne Unfalleinwirkung sind die Sicherungsmittel 6,7,9,10 nicht störend, da sie nicht oder nur geringfügig über eine vordere Begrenzungswand 8 des Verdeckkastens 2 hervorragen bzw. als Teil einer ohnehin vorhandenen, zur Aussteifung des Verdeckkastendeckels 3 dienenden Innenauskleidung ausgebildet sind. Die Sicherungsmittel 6,7,9,10 sind, um eine hinreichende Stabilität zu gewährleisten, vorzugsweise aus Stahlblech gefertigt, das mit den Kunststoff- bzw. Blechteilen des Verdeckkastendeckels 3 bzw. der Begrenzungswand 8 der Karosserie verbunden ist. Insbesondere bei dem als Winkel 9 ausgebildeten Sicherungsmittel sind Rippen 13 vorgesehen, die einem Biegemoment um die vertikale Achse bzw. um die Hochachse bei vertikaler Aufwärtsbewegung des Verdeckkastendeckels 3 entgegenwirken.

Im Bereich der Sollbruchlinie 5 ist die Innenauskleidung des Verdeckkastendeckels 3 bis an den äußeren Rand des Verdeckkastendeckels herangeführt, so daß hier die Aussteifungsfunktion durch die Innenauskleidung entfällt und das Abknicken in dieser Sollbruchstelle 5 ermöglicht ist (Fig. 5).

Abweichend von der gezeigten Darstellung, kann auch das Sicherungsmittel 6 des Verdeckkastendeckels 3 als abwärts weisender, mit Verstärkungsrippen versehener Steg ausgebildet sein, der vorderseitig einen Haken oder eine Formausnehmung zum formschlüssigen Eingriff mit dem Winkel 9 der Begrenzungswand 8 aufweist. Auch ist es möglich, das mit der Formausnehmung 11 versehene Sicherungsmittel 6 der Rückwand 8 zuzuordnen und den Winkel 9 an dem Verdeckkastendeckel 3 anzubringen.

Zusätzlich zu den gezeigten Sicherungsmitteln 6,7,9,10, die eine Abstützung des Verdeckkastendeckels 3 gegenüber der den Fahrzeuginnenraum rückseitig abschließenden Begrenzungswand 8 bewirken, ist als weiterer Sicherheitsfaktor die vordere Begrenzungskante des Verdeckkastendeckels 3 als von diesem abgeknickter Flansch 15 - beispielsweise mit einer Höhe von 20 mm-ausgebildet, der sich über die gesamte Breite des Verdeckkastendeckels 3 erstreckt.

Dieser Flansch 15 stützt sich bei einer leichten Vorwärtsverlagerung des Verdeckkastendeckels 3 bei heckseitiger Krafteinwirkung auf das Fahrzeug in Richtung des Pfeils F an der Rücksitzlehne 16 ab und verhindert dabei vor allem, daß die Vorderkante des Verdeckkastendeckels 3 in die Rücksitzlehne 16 einschneidet bzw. diese durchdringt, da durch die Vergrößerung der Aufprallfläche im Bereich des Flansches 15 eine gleichmäßige Kraftverteilung bewirkt ist. Scharfkantige, die Insassen gefährdende Teile des Verdeckkastendeckels 3 sind daher vermieden.

## Patentansprüche

1. Cabriolet-Fahrzeug mit einem faltbaren, in einen im rückwärtigen Bereich der Karosserie befindlichen Verdeckkasten (2) absenkbaren Verdeck sowie mit einem den Verdeckkasten (2) oberseitig abdeckenden Verdeckkastendeckel (3), der in seinem rückwärtigen Bereich am Fahrzeug angelenkt ist wobei der Verdeckkastendeckel (3) an seinem in Fahrtrichtung vorderen Bereich mit Sicherungsmitteln (6; 7) versehen ist, die im Falle heckseitiger Krafteinwirkung auf den Verdeckkastendeckel (3) mit karosserieseitig angeordneten Gegenlagern (9;10) in Eingriff gelangen und wobei der Verdeckkastendeckel (3) zumindest eine Sollbruchtelle (5) aufweist, **dadurch gekennzeichnet, daß** die Sollbruchstelle von Zumindest einer im wesentlichen in Fahrzeugquerrichtung verlaufenden, ein Einknicken des geschlossenen Verdeckkastendeckels (3) bei heckseitiger Krafteinwirkung ermöglichenden Sollbruchlinie (5) gebildet ist.

2. Cabriolet-Fahrzeug nach Anspruch 1, **dadurch gekennzeichnet, daß** die Sicherungsmittel (6; 7) einen räumlichen Abstand zu den Gegenlagern (9;10) aufweisen.

3. Cabriolet-Fahrzeug nach Anspruch 2, **dadurch gekennzeichnet, daß** die Sicherungsmittel (6) des Verdeckkastendeckels (3) und die Gegenlager (9) der Karosserie bei längsseitiger Krafteinwirkung auf das Fahrzeugheck in formschlüssigen Eingriff miteinander gelangen.

4. Cabriolet-Fahrzeug nach Anspruch 3, **dadurch gekennzeichnet, daß** als Gegenlager der Karosserie mindestens ein in Richtung des Fahrzeughecks vorstehender Winkel (9) vorgesehen ist.

5. Cabriolet-Fahrzeug nach Anspruch 4, **dadurch gekennzeichnet, daß** als Sicherungsmittel am Verdeckkastendeckel (3) mindestens ein vertikal abwärts verlaufendes Kantenteil (6) vorgesehen ist, das eine Formausnehmung (11) zum Eingriff des Winkels (9) der Karosserie aufweist.

6. Cabriolet-Fahrzeug nach einem der Ansprüche 3 bis 5, **dadurch gekennzeichnet, daß** zusätzlich zu den in formschlüssigen Eingriff gelangenden Sicherungsmitteln (6; 9) weitere kraftschlüssige Mittel (7; 10) zur Blockierung der Vorwärtsverlagerung des Verdeckkastendeckels (3) bei heckseitiger Krafteinwirkung vorgesehen sind.

7. Cabriolet-Fahrzeug nach Anspruch 6, **dadurch gekennzeichnet, daß** die vordere Kante des Verdeckkastendeckels (3) zumindest eine im wesentlichen senkrechte, mit einer rückwärtig geneigten Kante (10) im Bereich der Begrenzungswand (8) in Eingriff verlagerbare Stoßkante (7) aufweist.

8. Cabriolet-Fahrzeug nach einem der Ansprüche 1 bis 7, **dadurch gekennzeichnet, daß** die Sicherungsmittel (9) Rippen (13) zur Versteifung bezüglich eines Biegemoments um die vertikale Achse aufweisen.

9. Cabriolet-Fahrzeug nach einem der Ansprüche 2 bis 8, **dadurch gekennzeichnet, daß** der Verdeckkastendeckel (3) in seinem rückwärtigen Bereich an der den Verdeckkasten zum Fahrzeugheck hin abschließenden Querwandung angelenkt ist.

10. Cabriolet-Fahrzeug nach einem der Ansprüche 1 bis 9, **dadurch gekennzeichnet, daß** die vordere Kante des Verdeckkastendeckels (3) als flanschartige Abknickung (15) ausgebildet ist, die eine senkrechte, sich im wesentlichen über die gesamte Breite des Verdeckkastendeckels (3) erstreckende, in Fahrzeuglängsrichtung den Rücksitzlehnen (16) benachbarte Kante ausbildet.

## Claims

1. Convertible car with a foldable top capable of being lowered into a top boot (2) located in the rear part of the bodywork, as well as with a top boot lid (3) covering the top boot (2) on the top, which is connected by a joint in its rear position in the vehicle, whereby the top boot lid (3) is provided in its front area, in the direction of travel, with securing means (6; 7), which, in the event of a force being exerted from the rear on the top boot lid (3), engage with counter-bearings (9; 10) arranged on the bodywork side, and whereby the top boot lid (3) exhibits at least one predetermined breaking point (5), **characterised in that** the predetermined breaking point is formed from at least one predetermined breaking line running essentially in the transverse direction of the vehicle, allowing for the inwards folding of the closed top boot lid (3) when subjected to force from the rear.

2. Convertible car according to claim 1, **characterised in that** the securing means (6; 7) exhibit a spatial distance from the counter-bearings (9; 10).

3. Convertible car according to claim 2, **characterised in that** the securing means (6) of the top boot lid (3) and the counter-bearings (9) of the bodywork engage with one another in positive fit when force is imposed on the rear of the vehicle on the longitudinal side.

4. Convertible car according to claim 3, **characterised in that** at least one angle element (9) projecting in the direction of the rear of the vehicle is provided for as the counter-bearing of the bodywork.

5. Convertible car according to claim 4, **characterised in that**, as securing means on the top boot lid (3) provision is made for at least one edge part (6) running vertically downwards, which exhibits a shaped cut-out (11) for the angle element (9) of the bodywork to engage.

6. Convertible car according to one of claims 3 to 5, **characterised in that**, in addition to the securing means (6; 9) entering into positive-fit engagement, further positive-fit means (7; 10) arc provided in order to block the forward relocation of the top boot lid (3) in the event of force taking effect from the rear.

7. Convertible car according to claim 6, **characterised in that** the front edge of the top boot lid (3) exhibits at least one impact edge (7), essentially vertical, with a backwards-inclined edge (10), capable of being relocated so as to engage in the area of the delimitation wall (8).

8. Convertible car according to one of claims 1 to 7, **characterised in that** the securing means (9) exhibit ribs (13) to provide bracing in relation to a flexural moment about the vertical axis.

9. Convertible car according to one of claims 2 to 8, **characterised in that** the top boot lid (3) is connected by joints in its rear area to the transverse wall which closes off the top boot towards the rear of the vehicle.

10. Convertible car according to one of claims 1 to 9, **characterised in that** the from edge of the top boot lid (3) is designed as a flange-type fold (15), which forms a vertical edge extending essentially over the entire width of the top boot lid (3), adjacent to the rear seat backs (16) in the direction of travel of the vehicle.

## Revendications

1. Véhicule cabriolet comportant une capote qui peut s'escamoter dans un caisson à capote (2) prévu dans la zone arrière de la carrosserie, ainsi qu'un couvercle de caisson (3) qui couvre le côté supérieur du caisson à capote (2), ce couvercle étant articulé dans sa zone arrière au véhicule,
le couvercle (3) du caisson à capote étant muni dans sa zone avant dans le sens de déplacement du véhicule, de moyens de fixation (6, 7) qui en cas d'application d'une force par l'arrière sur le couvercle (3) viennent en prise avec des contre-appuis (9, 10) prévus sur la carrosserie, et le couvercle (3) comporte un point de rupture de consigne (5),
**caractérisé en ce que**
le point de rupture de consigne est formé par au moins une ligne de rupture de consigne (5) essentiellement transversale à la direction de déplacement du véhicule, permettant le pliage du couvercle (3), fermé.

2. Véhicule cabriolet selon la revendication 1,
**caractérisé en ce que**
les moyens de fixation (6) sont à une certaine distance des contre-appuis (9, 10).

3. Véhicule cabriolet selon la revendication 2,
**caractérisé en ce que**
les moyens de fixation (6) du couvercle (3) du caisson à capote et les contre-appuis (9) de la carrosserie arrivent en prise par une liaison de forme en cas d'action d'une force sur le côté longitudinal de l'arrière du véhicule.

4. Véhicule cabriolet selon la revendication 3,
**caractérisé en ce que**
le contre-appui de la carrosserie est constitué par au moins une cornière (9) en saillie en direction de l'arrière du véhicule.

5. Véhicule cabriolet selon la revendication 4,
**caractérisé en ce que**
le moyen de fixation du couvercle (3) du caisson à capote comporte au moins une pièce d'arête (6) descendant verticalement et qui comporte une cavité (11) pour la prise de la cornière (9) de la carrosserie.

6. Véhicule cabriolet selon l'une quelconque des revendications 3 à 5.
**caractérisé en ce qu'**
en plus des moyens de fixation (6, 9) qui arrivent en prise par une liaison de forme, il y a d'autres moyens de liaison par la force (7, 10) pour bloquer le déplacement vers l'avant du couvercle (3) du caisson à capote en cas de l'action d'une force contre le côté arrière.

7. Véhicule cabriolet selon la revendication 6.
**caractérisé en ce que**
le bord avant du couvercle de caisson (3) comporte une arête de butée (7) essentiellement verticale, et qui déplacée vient en prise avec l'arête (10) inclinée vers l'arrière au niveau de la cloison (8).

8. Véhicule cabriolet selon l'une quelconque des revendications 1 à 7
**caractérisé en ce que**
le moyen de fixation (9) comporte des nervures (13) pour rigidifier vis-à-vis du couple de flexion autour de l'axe vertical.

9. Véhicule cabriolet selon l'une quelconque des revendications 2 à 8.
**caractérisé en ce que**
le couvercle (3) du caisson à capote est articulé au niveau de sa zone arrière à la cloison fermant le caisson à capote en direction de l'arrlère du véhicule.

10. Véhicule cabriolet selon l'une quelconque des revendications 1 à 9,
**caractérisé en ce que**
l'arête avant du couvercle (3) du caisson à capote est réalisée sous la forme d'un pli (15) en forme de bride formant une arête verticale, s'étendant principalement sur toute la largeur du couvercle (3), au voisinage des dossiers de sièges (16) dans la direction longitudinale du véhicule.
